# EUROPEAN PATENT SPECIFICATION

(11) **EP 3 943 994 B1**
(45) Date of publication and mention of the grant of the patent: **27.09.2023**
(21) Application number: 21185793.3
(22) Date of filing: 15.07.2021
(51) Int. Cl.: G02B 6/44, B65D 63/10, F16L 3/06, F16L 3/10, F16L 3/11, G02B 6/48, H02G 3/32, H02G 7/05

(54) **SUPPORT EQUIPMENT FOR SUPPORTING, HOLDING, ACCOMMODATING, AND LOOSENING TELECOMMUNICATION CABLES**
TRÄGERGERÄTE ZUM TRAGEN, HALTEN, AUFNEHMEN UND LÖSEN VON TELEKOMMUNIKATIONSKABELN
ÉQUIPEMENT DE SUPPORT POUR SUPPORTER, MAINTENIR, ACCUEILLIR ET RELÂCHER DES CÂBLES DE TÉLÉCOMMUNICATION

(30) Priority: 21.07.2020 PT 2020116593
(43) Date of publication of application: 26.01.2022
(73) Proprietor: YELCO TECHNOLOGIES, S.A., 3810-744 Aveiro (PT)
(72) Inventor: Vidal Santos, Paulo Alexandre, 3810-744 Aveiro (PT); Almeida Mota, Pedro Miguel, 3810-744 Aveiro (PT)
(74) Representative: Lourenço Martinho do Rosário, Ana Margarida

(56) References cited:
- WO-A1-2020/146531
- US-A1- 2017 267 191
- US-A1- 2018 080 580
- US-A1- 2019 323 630
- US-B1- 8 756 767

## Description

### Scope of the invention

This invention refers to an equipment for use in telecommunications networks, more specifically, to an equipment for supporting, holding, accommodating, and loosening telecommunications cables, namely fiber optic cables.

### Framework of the invention

With the evolution of technologies associated with telecommunications, there is, with some frequency, the need to make structural changes to equipment, which translates into a permanent need to develop new solutions to accompany this evolution. More specifically, in the case of Fibre Optic installations in the area of Telecommunications in New Generation Networks, equipment is needed that allows Fibre To The Home (FTTH) and Fibre To The Node (FTTN) service providers to provide users with the optical signal, complying with the rules and parameters of the respective regulator. The present invention aims to solve the problem of securing the slack of telecommunication cables, namely telecommunication cables packed in coils installed in overhead networks and also in underground networks.

### Background of the invention

There have always been coils of cable on telecommunications poles, but with the increase in optical networks, coils with an excess of fiber optic cables are increasing, which leads to the inappropriate use of attaching/tying materials, such as plastic cable ties, by service installers. The plastic ties, due to several environmental conditions that cause the degradation of plastic, start to break causing the coils to open and fall to the ground level, increasing the risk of accidents to road users due to loose hanging cables.

It is known from the state of the art, equipment which already addresses the problem of suspension of telecommunications cables, of namely fiber optics.

An example is the document JP2006333613A, which describes an equipment that allows for the stable attachment of fiber optic cables, without these moving due to strong winds or support cable movement.

Another example is the document KR101110205B1 which describes an equipment for tying fiber optic cables, and which houses the fiber optic cables within.

Yet another example of an equipment that addresses this issue is document KR20130136951A, which describes an equipment that allows cable support (fiber optic cables, communication cables) between poles.

In yet another example, the document US8756767B1 discloses an equipment that blocks cables, which comprises a single lock fitted in the equipment through a first mechanism that allows for detaching the lock from the equipment for introducing the cables in the equipment and a second mechanism that allows for fitting the lock to the cables, to prevent cable slack.

US 2018/080580A1 discloses a cable bundling strap with a toothed locking mechanism.

The above-mentioned documents, despite addressing the same theme, differ from the current invention in that they do not have two locks, which consist of mechanisms that allow a more solid attachment of the communication cables within the equipment.

### Advantages of the invention

One of the advantages of the equipment of this invention is that it solves one of the problems currently present in the existing equipment, by allowing a solid hold in three types of situations. Additionally, the equipment is guaranteed to not degrade, since it is fabricated from endurable and UV resistant material, manufactured from polyamide 6 with 30% glass fiber.

Another advantage is the use of the equipment of the invention with all types of telecommunications cables, namely fiber optics, regardless of their diameter, due to their tightening being fully adjustable.

The invention also solves another problem that the currently existing equipment presents, by allowing its use in a hanging form, supported on a cable and in a fixed form attachment.

Finally, the invention solves the problem regarding the visual identification of the telecommunications operator as the owner of said telecommunications cable. Since the invention equipment is made of injected plastic, the material is colorable with the colors previously defined by the national communications authority.

### Brief description of the drawings

These and other characteristics can be easily understood through the accompanying drawings, which should be considered as mere examples and not restrictive in any way within the scope of the invention. In the drawings, and for illustrative purposes, the measurements of some of the elements may be exaggerated and not drawn to scale. The absolute dimensions and the relative dimensions do not correspond to the real relationships for the realization of the invention.

In a preferred embodiment:

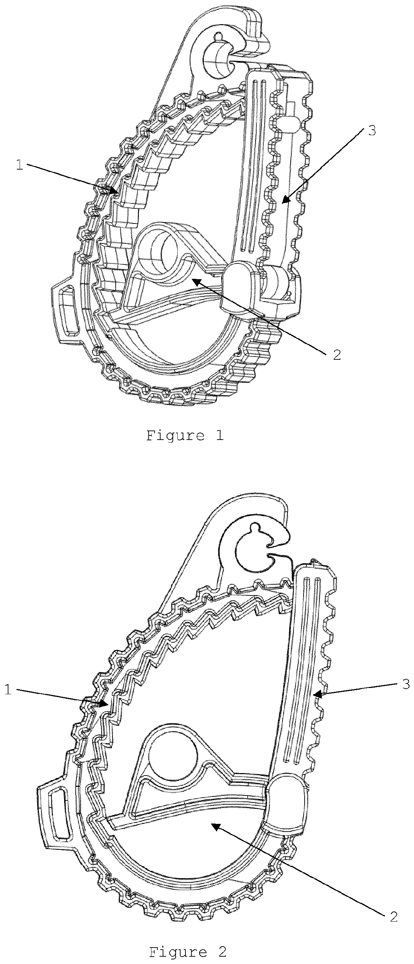

Figure 1 shows a perspective view of the fully closed equipment, with the internal lock in the closed position of maximum tightness and the external lock in the closed position.
Figure 2 shows a side view of the equipment completely closed, with the internal lock in the closed position of maximum tightness and the external lock in the closed position.

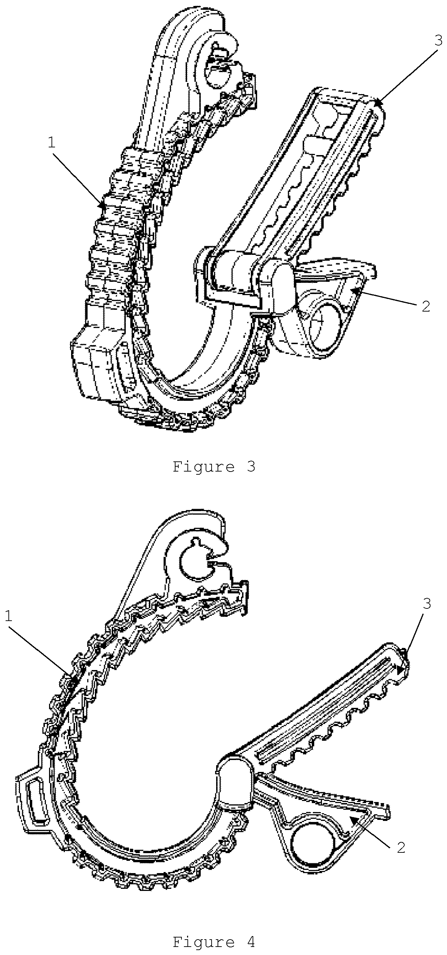

Figure 3 shows a perspective view of the equipment fully open, with the internal lock and the external lock in the open position.
Figure 4 shows a side view of the equipment fully open, with the internal lock and the external lock in the open position.

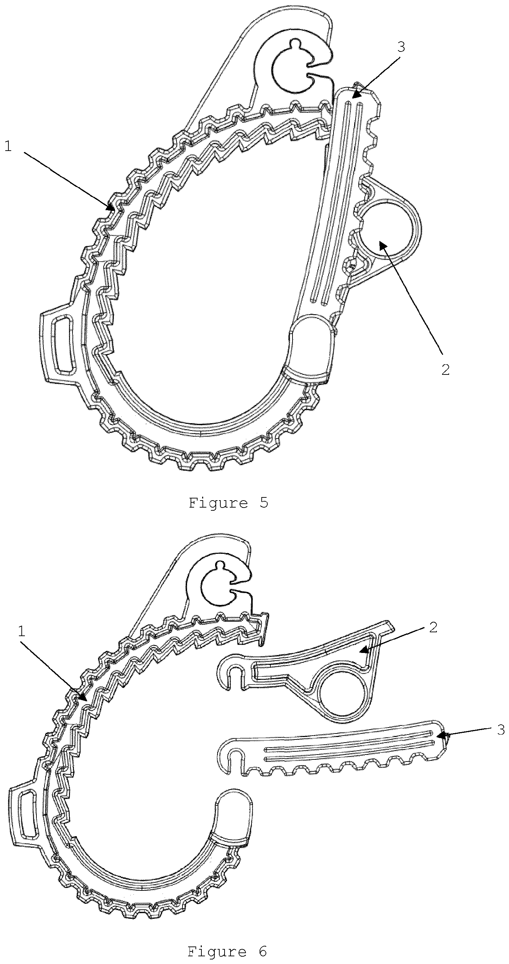

Figure 5 shows a side view of the closed equipment, with the internal lock in the closed position of minimum tightening and the external lock in the closed position.
Figure 6 shows an enlarged view of the equipment, composed by the equipment body, the internal lock and the external lock.

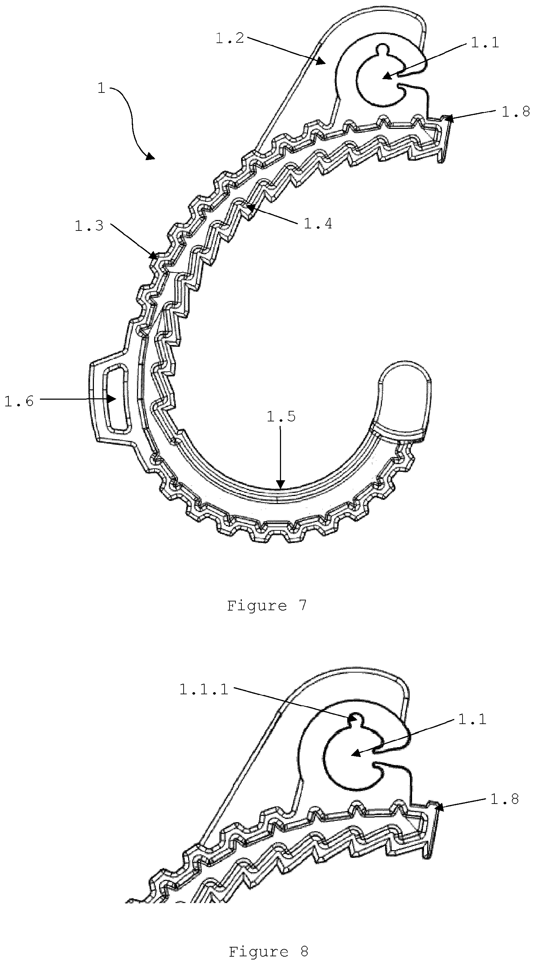

Figure 7 shows a side view of the equipment body.
Figure 8 shows a side view of the hole for the passage and accommodation of external support structures and the hole for accommodation of external support structures.

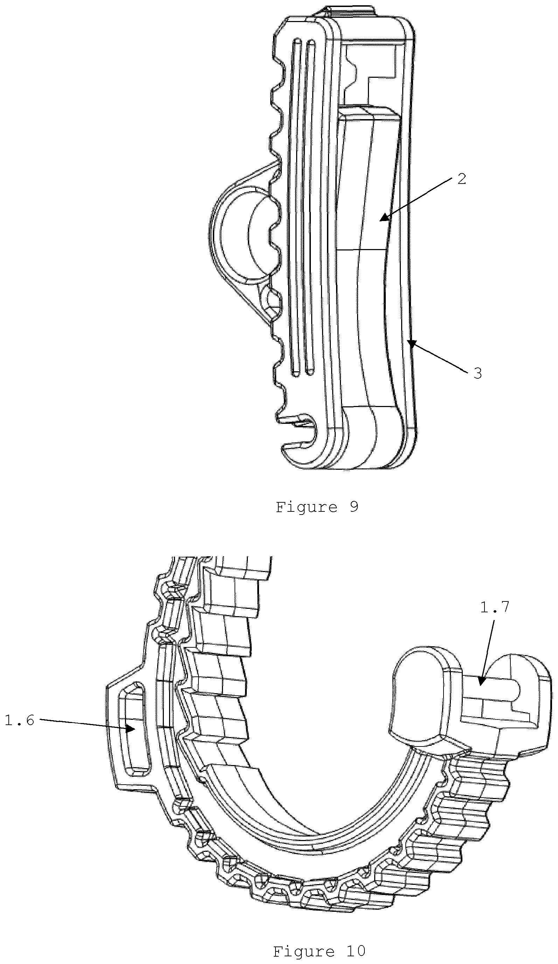

Figure 9 shows a view of the passage of the internal lock between the walls of the external lock.
Figure 10 shows a perspective view of the holding and support rod of the internal lock and the external lock and the hole for passing fasteners through.

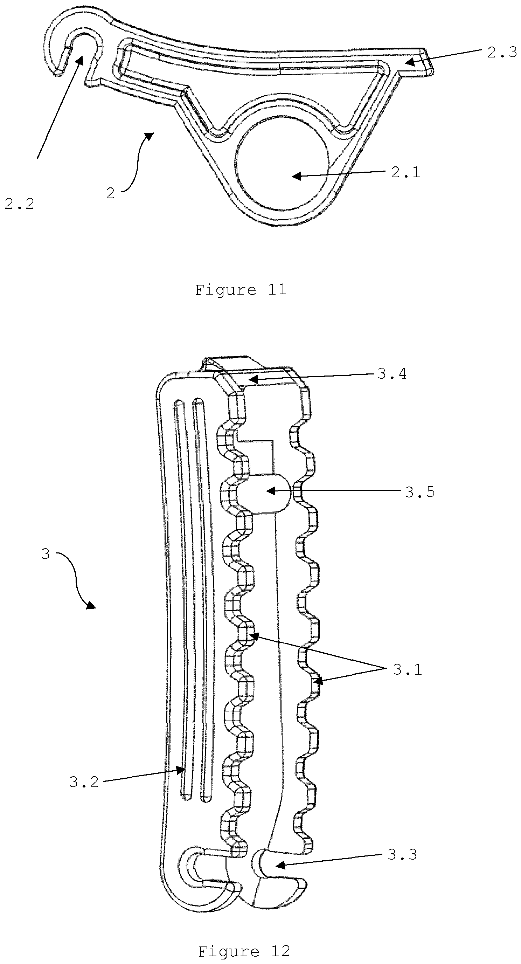

Figure 11 shows a side view of the internal lock.
Figure 12 represents a perspective view of the external lock.
Figure 13 shows a perspective view of a method of use of the equipment in an open mode, in the hanging form, supported on a cable.
Figure 14 shows a perspective view of a method of use of the equipment in an open mode, attached to external support structures with the telecommunications cables already accommodated within the equipment.
Figure 15 shows a perspective view of a method of use of the equipment in a closed mode, attached to external support structures with the telecommunications cables already accommodated within the equipment.
Figure 16 shows a perspective view of a method of use of the equipment in an open mode, held by external elements.
Figure 17 presents a perspective view of a method of use of the equipment in an open mode, held by external elements, with the telecommunications cables already accommodated within the equipment.
Figure 18 presents a perspective view of a method of use of the equipment in a closed mode, held by external elements, with the telecommunications cables already accommodated within the equipment.
Figure 19 shows a perspective view of the attachment plate of the equipment to a surface.
Figure 20 shows a perspective view of the attachment plate of the equipment to a surface, with the telecommunications cables already accommodated within the equipment.

The figure shows the elements, components, and details of the equipment of the present invention:
1. Body of the equipment
   1.1 Hole for passage and accommodation
      1.1.1 Hole for accommodation
   1.2 Upper support
   1.3 Reinforcement of the external contour
   1.4 Tightening and adjustment guide
   1.5 Cable support
   1.6 Hole for passing fasteners through
   1.7 Connection and support rod
   1.8 Safety tab
2. Internal lock
   2.1 Closing and opening hole
   2.2 Slot of the internal lock
   2.3 Locking tooth
3. External lock
   3.1 Lower reinforcement
   3.2 Lateral reinforcement
   3.3 Slot of the external lock
   3.4 Locking ramp
   3.5 Connecting and reinforcing pin
4. Attachment plate

### Detailed description of the invention

Telecommunication cable slack means that part of the telecommunication cable that is not used in an installation.

In reference to the drawings, the present invention relates to equipment for telecommunications networks, more specifically, equipment for supporting, holding, accommodating, and loosening telecommunications cables, namely fiber optics.

The equipment consists of a body of the equipment (1), an internal lock (2) for blocking telecommunication cables, and an external lock (3) to prevent telecommunication cables from falling. Additionally, if it is necessary to fix the equipment to a surface, the equipment includes an attachment plate (4).

The upper side of the body of the equipment (1) comprises an upper support (1.2) in the shape of a ridge that incorporates the hole for passage and accommodation (1.1) of external support structures that aims to accommodate and pass external support structures through, which can be namely but not exclusively, steel poles or cables, or other raw material, in order to allow the body of the equipment (1) to be properly suspended, when the equipment is used in its suspended form. The hole for passage and accommodation (1.1) of external support structures incorporates a hole for accommodation (1.1.1) of external support structures, so that the structure gets blocked, preventing the said structure from moving after its fastening.

The body of the equipment (1) has, all around the external side, a toothed shaped reinforcement of the external contour (1.3) . The interior side of the body of the equipment (1) comprises a tightening and adjustment guide (1.4) of the internal lock (2) comprising a set of oblique teeth and the cable support (1.5), where the telecommunications cables are properly supported and held. On the exterior of the body of the equipment (1) is the hole for passing fasteners through (1.6), through which external elements pass, for attaching the equipment to external structures. At one end of the body of the equipment (1) is the connection and support rod (1.7) of the internal lock (2) and of the external lock (3) which has a cylindrical shape and which serves to interlock and support the internal lock (2) and the external lock (3) to the body of the equipment (1), and on which the internal lock (2) and the external lock (3) can rotate, namely to allow the choice of the locking position of the locking tooth (2.3), as well as to close and open the external lock (3). The body of the equipment (1) also comprises a safety tab (1.8) .

The internal lock (2) comprises a closing and opening hole (2.1) located on the central side, the purpose of which is to allow the opening and closing of the internal lock (2). At one end of the internal lock (2) is the slot of the internal lock (2.2) to fit the connection and support rod (1.7), which allows the interlock and pivot of the internal lock (2) in the body of the equipment (1). At the opposite end of the internal lock (2) to the end where the slot of the internal lock (2.2) is located is the locking tooth (2.3), which allows the internal lock (2) to fit into one of the teeth of the tightening and adjustment guide (1.4) of the body of the equipment (1).

The external lock (3) consists of two side walls, joined at one end by the locking ramp (3.4) whose purpose is to block the movement of the external lock (3), by fitting in the safety tab (1.8) of the body of the equipment (1). Each of the side walls incorporates a lower reinforcement (3.1), toothed for lower structural reinforcement of the external lock (3). In addition, the external lock (3) incorporates a lateral reinforcement (3.2) on the external lateral side, for lateral structural reinforcement of the external lock (3). At the opposite end of the external lock (3) to the end where the locking ramp (3.4) is located is the slot of the external lock (3.3) for fitting in the connection and support rod (1.7), which allows the coupling and pivoting of the external lock (3) on the body of the equipment (1). The external lock (3) is further reinforced by the connecting and reinforcing pin (3.5) for structural reinforcement, which allows an internal structural reinforcement of the external lock (3). The interior space enclosed by the side walls of the external lock (3) allows the internal lock (2) to pass through.

The body of the equipment (1), the internal lock (2), and the external lock (3), such as all the components comprised in these elements of the invention, are fabricated in namely, but not exclusively, injected plastic.

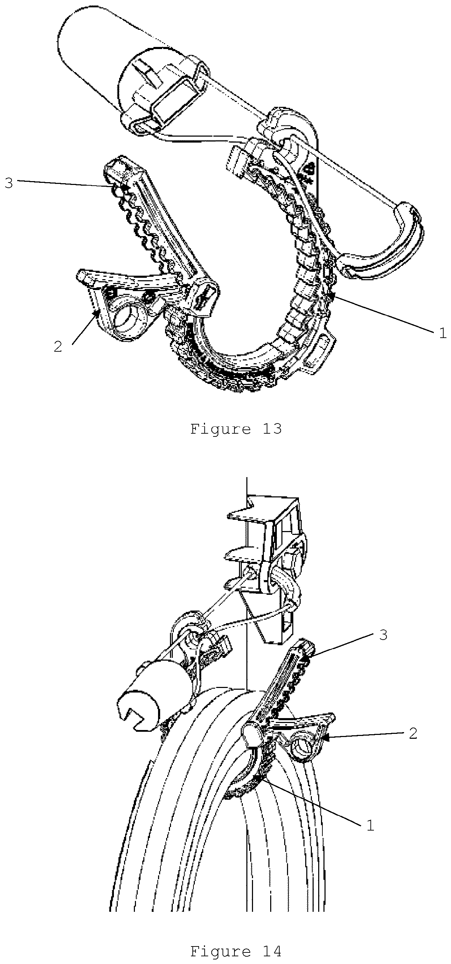

In one method of using the invention, as can be seen in figure 13, the equipment is suspended in external support structures, namely on support cables, made of steel or other suitable material, existing between poles. The external support structure passes through the hole for passage and accommodation (1.1) of external support structures, its path being blocked by fitting the external structure, or part of the external structure, in the hole for accommodation (1.1.1) of external support structures. This type of installation allows the equipment to be suspended on previously installed cables.

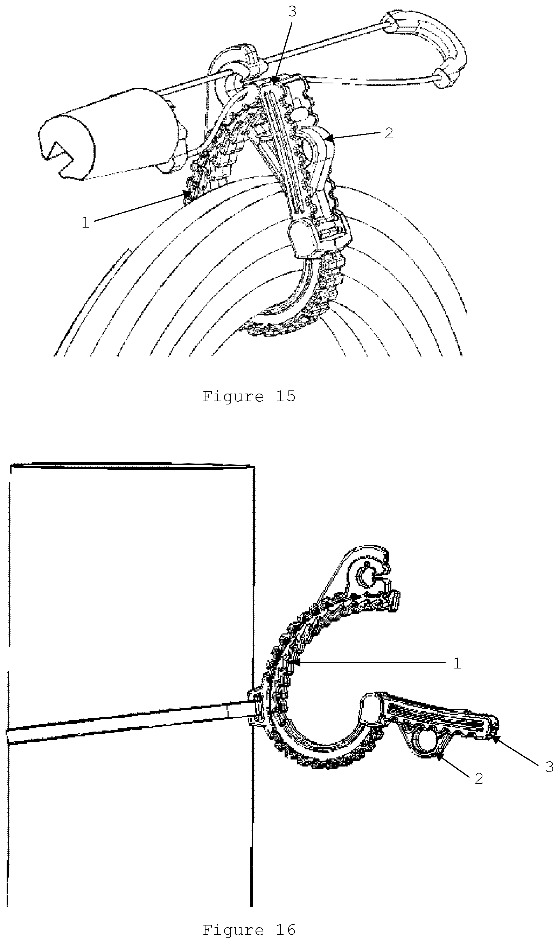

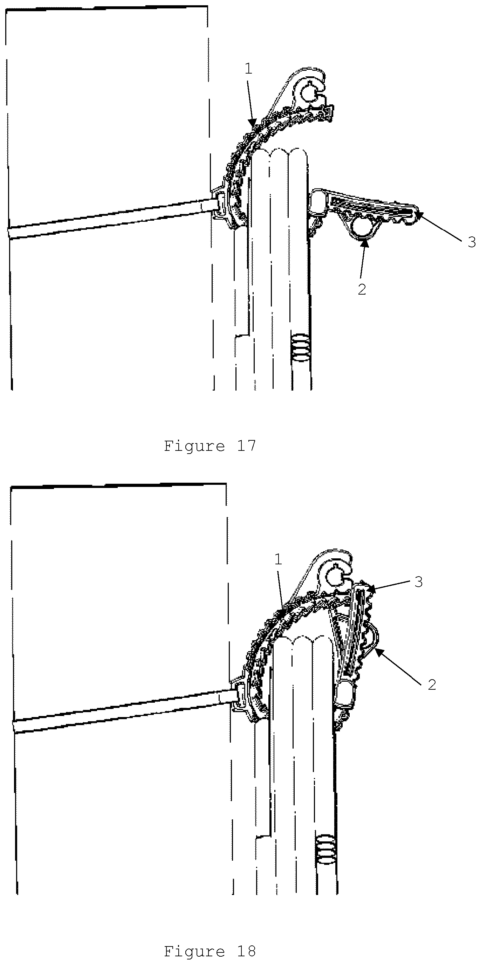

In another method of using the invention, according to figures 16 to 18, the equipment is placed on a pole, being held by an external element that passes through the hole for passing fasteners through (1.6), in which the external element is, namely, a metal tape that wraps around the pole. This type of installation allows the body of the equipment (1) to be suspended from the pole.

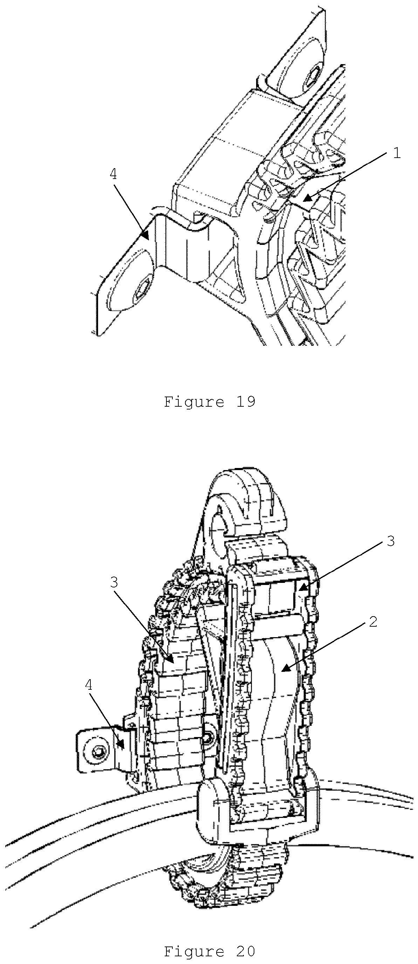

In yet another method of using the invention, according to figures 19 and 20, the equipment is fixed to a surface through the attachment plate (4) which is inserted in the hole for passing fasteners through (1.6). This type of installation allows the body of the equipment (1) to be fixed to a surface, for example, to a wall.

With the equipment open, that is, with the internal lock (2) and the external lock (3) placed in the open position, the telecommunications cables are placed in the cable support (1.5). The internal lock (2) is adjusted to the volume occupied by the telecommunications cables, by inserting the locking tooth (2.3) in one of the teeth of the tightening and adjustment guide (1.4), to block the telecommunications cables from making any movement. The external lock (3) is then placed in the closed position, by fitting the locking ramp (3.4) on the safety tab (1.8), preventing the telecommunications cables from falling off the equipment.

## Claims

1. Equipment for supporting, holding, accommodating, and loosening telecommunications cables, comprising an equipment body (1), an internal lock (2) for blocking telecommunication cables, and at least one means for fixing the equipment to external support structures, **characterized by** additionally comprising:
- an external lock (3) for preventing telecommunication cables from falling;
- at one end of the equipment body (1), a connection and support rod (1.7) for fitting the internal lock (2) and the external lock (3) by one end of the internal lock (2) and by one end of the external lock (3); and
- a tightening and adjustment guide (1.4) on an inner side of the equipment body (1) for fitting a locking tooth (2.3) positioned at another end of the internal lock (2) and a safety tab (1.8) for fitting a locking ramp (3.4) positioned at another end of the external lock (3).

2. Equipment according to the previous claim, wherein the body of the equipment (1) further comprises, in an upper side of the body of the equipment (1) an upper support (1.2) which integrates a hole for the passage and accommodation (1.1) of external support structures, in an external side of the body of the equipment (1) a reinforcement of the external contour (1.3) of the body of the equipment (1) and a hole for passing fasteners through (1.6), and in the inner side of the equipment body (1) a cable support (1.5).

3. Equipment according to claim 2, wherein the upper support (1.2) has a ridge shape.

4. Equipment according to any one of the preceding claims, wherein the tightening and adjustment guide (1.4) of the equipment body (1) comprises a set of teeth.

5. Equipment according to claim 2, wherein the at least one means for fixing the equipment to external support structures is the hole for passage and accommodation (1.1) of external support structures.

6. Equipment according to the preceding claim, wherein the hole for passage and accommodation (1.1) of external support structures incorporates a hole for accommodation (1.1.1) of external support structures.

7. Equipment according to claim 2, wherein the hole for passing fasteners through (1.6) is configured for attaching the equipment to external support structures.

8. Equipment according to any of the preceding claims, wherein the internal lock (2) further comprises a closing and opening hole (2.1) and a slot of the internal lock (2.2) .

9. Equipment according to any of the preceding claims, wherein the external lock (3) further comprises a slot of the outer lock (3.3).

10. Equipment according to any one of the preceding claims, wherein the fitting of the locking tooth (2.3) of the internal lock (2) in one of the teeth of the tightening and adjustment guide (1.4) is configured to block the telecommunications cables.

11. Equipment according to any one of the preceding claims, wherein the fit of the locking ramp (3.4) of the external lock (3) to the safety tab (1.8) is configured to prevent the telecommunications cables from falling.

12. Equipment according to any of the preceding claims, wherein the internal lock (2) and the external lock (3) are configured to be interlocked to the body of the equipment (1) by the connection and support rod (1.7).

13. Equipment according to any one of the preceding claims, wherein the external support structures are support cables or posts.

14. Method of placing telecommunications cables on the equipment claimed in any one of claims 1 to 13, **characterized by** comprising the following steps:
- the internal lock (2) and the external lock (3) are placed in the open position;
- the telecommunication cables are placed on the cable support (1.5);
- the internal lock (2) is adjusted to the volume occupied by the telecommunication cables, through insertion of the locking tooth (2.3) in one of the teeth of the tightening and adjustment guide (1.4);
- The external lock (3) is placed in the locked position, by fitting the locking ramp (3.4) on the safety tab (1.8) .

## Patentansprüche

1. Ausrüstung zum Tragen, Halten, Aufnehmen und Lösen von Telekommunikationskabeln, die einen Körper der Ausrüstung (1), eine innere Verriegelung (2) zum Blockieren von Telekommunikationskabeln und mindestens ein Mittel zum Befestigen der Ausrüstung an externen Tragstrukturen umfasst, **dadurch gekennzeichnet, dass** sie zusätzlich umfasst:
- eine äußeren Verriegelung (3), um zu verhindern, dass Telekommunikationskabel herunterfallen;
- an einem Ende der Körper der Ausrüstung (1) eine Verbindungs- und Stützstange (1.7) zum Anbringen der inneren Verriegelung (2) und der äußeren Verriegelung (3) durch ein Ende der inneren Verriegelung (2) und durch ein Ende der äußeren Verriegelung (3); und
- eine Spann- und Einstellführung (1.4) an einer Innenseite der Körper der Ausrüstung (1) zum Anbringen eines Verriegelungszahns (2.3), der an einem anderen Ende des inneren Verriegelung (2) positioniert ist, und eine Sicherheitslasche (1.8) zum Anbringen einer Verriegelungsrampe (3.4), die an einem anderen Ende der äußeren Verriegelung (3) positioniert ist.

2. Ausrüstung nach dem vorhergehenden Anspruch, wobei der Körper der Ausrüstung (1) ferner an einer Oberseite des Körpers der Ausrüstung (1) eine obere Stütze (1.2), die ein Loch für den Durchgang und die Aufnahme (1.1) von externen Stützstrukturen integriert, an einer Außenseite des Körpers der Ausrüstung (1) eine Verstärkung der Außenkontur (1.3) des Körpers der Ausrüstung (1) und ein Loch zum Durchführen von Befestigungsmitteln (1.6) und an der Innenseite des Körpers der Ausrüstung (1) eine Kabelträger (1.5) umfasst.

3. Ausrüstung nach Anspruch 2, wobei der obere Stütze (1.2) eine Rippenform aufweist.

4. Ausrüstung nach einem der vorhergehenden Ansprüche, wobei die Spann- und Einstellführung (1.4) des Körpers der Ausrüstung (1) eine Verzahnung aufweist.

5. Ausrüstung nach Anspruch 2, wobei das mindestens eine Mittel zur Befestigung der Ausrüstung an externen Stützstrukturen das Loch für den Durchgang und die Aufnahme (1.1) von externen Stützstrukturen ist.

6. Ausrüstung nach dem vorhergehenden Anspruch, wobei das Loch für den Durchgang und die Aufnahme (1.1) von externen Stützstrukturen ein Loch für die Aufnahme (1.1.1) von externen Stützstrukturen umfasst.

7. Ausrüstung nach Anspruch 2, wobei das Loch zum Durchführen von Befestigungselementen (1.6) für die Befestigung der Ausrüstung an externen Stützstrukturen konfiguriert ist.

8. Ausrüstung nach einem der vorhergehenden Ansprüche, wobei das inneren Verriegelung (2) ferner ein Schließ-und Öffnungsloch (2.1) und einen Schlitz des Innenschlosses (2.2) umfasst.

9. Ausrüstung nach einem der vorhergehenden Ansprüche, wobei das inneren Verriegelung (2) ferner ein Schließ-und Öffnungsloch (2.1) und einen Schlitz des Innenschlosses (2.2) umfasst.

10. Ausrüstung nach einem der vorhergehenden Ansprüche, bei der das Einpassen des Verriegelungszahns (2.3) des inneren Verriegelung (2) in einen der Zähne der Spann-und Einstellführung (1.4) so gestaltet ist, dass die Telekommunikationskabel blockiert werden.

11. Ausrüstung nach einem der vorhergehenden Ansprüche, wobei die Passung der Verriegelungsrampe (3.4) der äußeren Verriegelung (3) an der Sicherheitslasche (1.8) so gestaltet ist, dass ein Herabfallen der Telekommunikationskabel verhindert wird.

12. Ausrüstung nach einem der vorhergehenden Ansprüche, wobei die innere Verriegelung (2) und die äußeren Verriegelung (3) so gestaltet sind, dass sie durch die Verbindungs- und Stützstange (1.7) mit dem Körpers der Ausrüstung (1) verriegelt werden.

13. Ausrüstung nach einem der vorhergehenden Ansprüche, wobei die externen Stützstrukturen Stützkabel oder - pfosten sind.

14. Verfahren zum Anbringen von Telekommunikationskabeln an der Ausrüstung nach einem der Ansprüche 1 bis 13, **dadurch gekennzeichnet, dass** es die folgenden Schritte umfasst:
- die innere Verriegelung (2) und die äußeren Verriegelung (3) werden in die offene Position gebracht;
- die Telekommunikationskabel werden auf den Kabelträger (1.5) gelegt;
- die innere Verriegelung (2) wird auf das von den Fernmeldekabeln eingenommene Volumen eingestellt, indem der Verriegelungszahn (2.3) in einen der Zähne der Spann- und Einstellführung (1.4) eingeführt wird;
- die äußeren Verriegelung (3) wird in die verriegelte Position gebracht, indem die Verriegelungsrampe (3.4) auf die Sicherheitslasche (1.8).

## Revendications

1. Équipement pour supporter, maintenir, loger et détacher des câbles de télécommunication, comprenant un corps d'équipement (1), un verrou interne (2) pour bloquer les câbles de télécommunication, et au moins un moyen pour fixer l'équipement à des structures de support externes, **caractérisé en ce qu'**il comprend:
- un verrou externe (3) pour empêcher les câbles de télécommunication de tomber;
- à une extrémité du corps de l'équipement (1), une tige de connexion et de support (1.7) pour fixer le verrou interne (2) et le verrou externe (3) par une extrémité du verrou interne (2) et par une extrémité du verrou externe (3); et
- un guide de serrage et de réglage (1.4) sur un côté intérieur du corps de l'équipement (1) pour le montage d'une dent de verrouillage (2.3) placée à une autre extrémité de le verrou interne (2) et une languette de sécurité (1.8) pour le montage d'une rampe de verrouillage (3.4) placée à une autre extrémité du verrou externe (3).

2. Équipement selon la revendication précédente, dans lequel le corps de l'équipement (1) comprend en outre, dans une face supérieure du corps de l'équipement (1), un support supérieur (1.2) qui intègre un trou pour le passage et le logement (1.1) de structures de support externes, dans une face extérieur du corps de l'équipement (1), un renforcement du contour externe (1.3) du corps de l'équipement (1) et un trou pour le passage d'attaches (1.6), et dans la face intérieur du corps d'équipement (1) un support de câble (1.5).

3. Équipement selon la revendication 2, dans lequel le support supérieur (1.2) a une forme de crête.

4. Équipement selon l'une quelconque des revendications précédentes, dans lequel le guide de serrage et de réglage (1.4) du corps d'équipement (1) comprend un ensemble de dents.

5. Équipement selon la revendication 2, dans lequel l'au moins un moyen de fixation de l'équipement aux structures de support externe est le trou de passage et de logement (1.1) des structures de support externes.

6. Équipement selon la revendication précédente, dans lequel le trou de passage et de logement (1.1) de structures de support externes incorpore un trou de logement (1.1.1) de structures de support externes.

7. Équipement selon la revendication 2, **caractérisé en ce que** le trou de passage des attaches (1.6) est configuré pour fixer l'équipement à des structures de support externes.

8. Équipement selon l'une quelconque des revendications précédentes, dans lequel le verrou interne (2) comprend en outre un trou de fermeture et d'ouverture (2.1) et une fente du verrou interne (2.2).

9. Équipement selon l'une quelconque des revendications précédentes, dans lequel le verrou externe (3) comprend en outre une fente du verrou externe (3.3).

10. Équipement selon l'une quelconque des revendications précédentes, dans lequel l'emboîtement de la dent de verrouillage (2.3) du verrou interne (2) dans l'une des dents du guide de serrage et de réglage (1.4) est configuré pour bloquer les câbles de télécommunication.

11. Équipement selon l'une quelconque des revendications précédentes, dans lequel l'ajustement de la rampe de verrouillage (3.4) du verrou externe (3) sur la languette de sécurité (1.8) est configuré pour empêcher la chute des câbles de télécommunication.

12. Équipement selon l'une quelconque des revendications précédentes, dans lequel le verrou interne (2) et le verrou externe (3) sont configurés pour être verrouillés au corps de l'équipement (1) par la tige de connexion et de support (1.7).

13. Équipement selon l'une quelconque des revendications précédentes, dans lequel les structures de support externes sont des câbles de support ou des poteaux.

14. Procédé de placement de câbles de télécommunications sur l'équipement selon l'une quelconque des revendications 1 à 13, **caractérisé en ce qu'**il comprend les étapes suivantes :
- le verrou interne (2) et le verrou externe (3) sont placées en position ouverte;
- les câbles de télécommunication sont placés sur le support de câble (1.5);
- le verrou interne (2) est ajusté au volume occupé par les câbles de télécommunication, par l'insertion de la dent de verrouillage (2.3) dans l'une des dents du guide de serrage et de réglage (1.4);
- le verrou extérieur (3) est placé en position verrouillée, par emboîtement de la rampe de verrouillage (3.4) sur la languette de sécurité (1.8).
